# EUROPÄISCHE PATENTSCHRIFT

(11) **EP 3 031 104 B1**
(45) Veröffentlichungstag und Bekanntmachung des Hinweises auf die Patenterteilung: **24.02.2021**
(21) Anmeldenummer: 14755603.9
(22) Anmeldetag: 07.08.2014
(51) Int. Cl.: H01R 13/629

(54) **SCHNELLLADESYSTEM SOWIE VERFAHREN ZUR LAGERUNG EINER KONTAKTVORRICHTUNG AN EINER LAGERVORRICHTUNG**
RAPID CHARGING SYSTEM AND METHOD FOR MOUNTING A CONTACT APPARATUS ON A BEARING APPARATUS
SYSTEME DE RECHARGE RAPIDE ET PROCEDE DE MONTAGE D'UN DISPOSITIF DE CONTACT SUR UN DISPOSITIF DE SUPPORT

(30) Priorität: 09.08.2013 DE 102013013201
(43) Veröffentlichungstag der Anmeldung: 15.06.2016
(73) Patentinhaber: Schunk Transit Systems GmbH, 35435 Wettenberg (DE)
(72) Erfinder: WEIGEL, Wilfried, 35232 Dautphetal (DE); SCHNEIDER, Lothar, 35633 Lahnau (DE); DOMES, Matthias, 61231 Bad Nauheim (DE); THIELMANN, Viktor, 35415 Pohlheim (DE); STAUBACH, Timo, 36358 Herbstein (DE)
(74) Vertreter: advotec.
(86) Internationale Anmeldenummer: PCT/EP2014/066984
(87) Internationale Veröffentlichungsnummer: WO 2015/018889

(56) Entgegenhaltungen:
- WO-A1-03/068666
- JP-A- 2006 081 310
- US-A1- 2003 162 448

## Beschreibung

Die Erfindung betrifft ein Schnellladesystem sowie ein Verfahren zur Lagerung einer Kontaktvorrichtung an einer Lagervorrichtung eines Schnellladesystems für elektrisch angetriebene Fahrzeuge, insbesondere Elektrobusse oder dergleichen, mit einer Kontaktvorrichtung und einer Lagervorrichtung zur Lagerung der Kontaktvorrichtung, wobei die Kontaktvorrichtung zur Ausbildung einer elektrischen leitenden Verbindung zwischen einem Fahrzeug und einer stationären Ladestation mit einer Ladekontakteinheit dient, wobei die Kontaktvorrichtung und die Lagervorrichtung an einem Fahrzeug anordbar sind, wobei die Kontaktvorrichtung eine Kontakteinrichtung umfasst, wobei mit der Kontakteinrichtung die Ladekontakteinheit kontaktierbar ist, wobei die Kontaktvorrichtung eine Positioniereinrichtung umfasst, wobei mittels der Positioniereinrichtung die Kontakteinrichtung relativ zur Ladekontakteinheit und zum Fahrzeug in vertikaler und horizontaler Richtung positionierbar und von einer Kontaktposition an der Ladekontakteinheit in eine Lagerposition an der Lagervorrichtung am Fahrzeug bringbar ist, wobei die Kontakteinrichtung mittels der Positioniereinrichtung der Lagervorrichtung in vertikaler Richtung zuführbar ist.

Ähnliche Kontaktvorrichtungen und Ladekontakteinheiten sind aus dem Stand der Technik bekannt und werden regelmäßig zur Schnellladung elektrisch angetriebener Fahrzeuge an einer Haltestelle bzw. einem Haltepunkt eingesetzt. Im Nahverkehr eingesetzte elektrisch angetriebene Fahrzeuge, wie beispielsweise Busse, können unter anderem über eine Oberleitung kontinuierlich mit elektrischer Energie versorgt werden. Dies setzt jedoch das Vorhandensein bzw. den Unterhalt eines Oberleitungssystems voraus. Um die Vorteile eines elektrischen Antriebs auch ohne ein Oberleitungsnetz nutzen zu können, ist es bekannt, öffentliche Verkehrsmittel mit Batterien oder auch anderen Arten von Energiespeichern auszustatten. Von Nachteil sind hier die begrenzte Reichweite des Verkehrsmittels und eine nach einer vergleichsweise kurzen Fahrzeit erforderliche Aufladung der Batterien. Ein Dauerbetrieb des Verkehrsmittels kann jedoch gewährleistet werden, wenn während eines Halts des Verkehrsmittels an einer Haltestelle eine Schnellladung der Batterien erfolgen kann.

Hier sind aus dem Stand der Technik verschiedene Systeme zur Herstellung einer elektrisch leitenden Verbindung zwischen einer Ladestation, welche im Bereich einer Haltestelle stationär angeordnet ist, und einem Fahrzeug bzw. Elektrobus bekannt. So kann an einem Elektrobus ein sogenannter Stromabnehmer mit einer Schleifleiste auf einem Dach des Elektrobusses angeordnet sein, wobei im Bereich der Haltestelle eine in Fahrtrichtung des Elektrobusses längs verlaufende Schiene über einer Fahrbahn aufgehängt ist. Bei einem Halt des Elektrobusses an der Haltestelle wird der Stromabnehmer von dem Dach des Busses nach oben an die Schiene bewegt, wodurch eine elektrische Verbindung für die Dauer des vorgesehenen Halts des Elektrobusses an der Haltestelle hergestellt wird, sodass in diesem Zeitraum eine Schnellladung erfolgen kann. Insbesondere sind jedoch zwei voneinander unabhängige Stromabnehmer und entsprechende Kontaktierbereiche an der Schiene erforderlich, um einen Ladestromkreis ausbilden zu können.

Weiter ist es bekannt, an einem Stromabnehmer mehrere als Schleifleiste ausgebildete Kontaktelemente anzuordnen und diese mit einer entsprechenden Anzahl in Fahrtrichtung des Elektrobusses angeordneter, paralleler Schienen zu kontaktieren. So ist es möglich, eine größere Anzahl von Kontaktpaarungen mit einem einzelnen Stromabnehmer bzw. einer Kontaktvorrichtung gleichzeitig herzustellen. So zusätzlich ausgebildete elektrische Verbindungsleitungen zwischen der Ladestation und dem Fahrzeug können beispielsweise zur Steuerung und Überwachung eines Ladevorgangs genutzt werden.

Bei einem weiteren bekannten Schnellladesystem ist eine Kontaktvorrichtung auf einem Dach eines Elektrobusses so angeordnet, dass quer zur Fahrtrichtung des Elektrobusses ein Arm ausgefahren werden kann, welcher mit einer Ladekontakteinheit, die in einem Haltestellenunterstand oder einem Gebäude integriert ist, verbunden werden kann. Hier ist es insbesondere von Nachteil, dass der Elektrobus von einem Fahrer besonders genau an einer derartigen Haltestelle an einer vorbestimmten Position positioniert werden muss, damit überhaupt eine Verbindung zwischen Elektrobus und Ladestation hergestellt werden kann.

Jedoch auch bei stationären Ladekontakteinheiten bzw. Schienen, die oberhalb oder seitlich eines an einer Haltestelle haltenden Elektrobusses angeordnet sind, können eine Reihe Probleme auftreten. Insbesondere in Abhängigkeit einer Zuladung des Elektrobusses kann der Elektrobus relativ zur Ladekontakteinheit bei einem Halt tiefer oder höher positioniert sein. Auch bei einem Absenken des Elektrobusses auf der Einstiegsseite, um so den Fahrgästen das Einsteigen zu erleichtern, kommt es zu einem Verschieben der Kontaktvorrichtung bzw. der verwendeten Schleifleisten relativ zu einer Ladekontakteinheit bzw. Schiene, sodass ein elektrischer Kontakt unterbrochen werden kann. Werden parallele Schienen verwendet, ist es im Übrigen auch hier erforderlich, den Elektrobus in einem dafür vorgesehenen Bereich an der Haltestelle relativ genau zu positionieren. Eine von einer vorgesehenen Position des Elektrobusses abweichende Position sowie einseitiges, seitliches Absenken des Elektrobusses können eine erfolgreiche Kontaktierung bzw. Verbindung von Fahrzeug und Ladestation verhindern und bergen ein erhebliches Gefahrenpotenzial. So kann es zur unbeabsichtigten Kontaktierung bzw. Verbindung von Leitern oder auch zu Kurzschlüssen kommen, welche Bauelemente des Schnellladesystems oder auch in der Nähe befindliche Personen schädigen können.

Da prinzipiell Kontakte der Kontaktvorrichtung der ggf. über dem Fahrzeug befindlichen Ladekontakteinheit zur Herstellung einer elektrischen Verbindung in horizontaler Richtung zugeführt werden müssen, bedarf es eines Antriebs durch eine Positioniereinrichtung. Auch eine abweichende Position des Elektrobusses von einer vorgesehenen Position sowie ein seitliches Absenken des Elektrobusses muss durch eine mögliche Verschiebung der Kontaktvorrichtung bzw. der Kontaktelemente in einer horizontalen Richtung quer zu einer Fahrtrichtung des Elektrobusses und relativ zur Ladekontakteinheit und zum Fahrzeug gewährleistet werden. Auch hier ist ggf. ein Antrieb zur Verschiebung der Kontaktelemente in der horizontalen Richtung erforderlich. Bei beispielsweise einem motorischen Antrieb sind weitere Mittel zur Erkennung der Ist- und Soll-Positionen der Kontaktelemente sowie zur Ansteuerung des betreffenden Antriebs erforderlich. Dies hat nicht unerhebliche Kosten zur Ausbildung der Positioniereinrichtung zur Folge. Auch birgt der Einsatz der vorgenannten Mittel aus verschiedensten Gründen ein erhöhtes Risiko eines Ausfalls derselben, wie beispielsweise unzulängliche Witterungsbedingungen. Darüber hinaus ist es erforderlich, eine derart ausgebildete Positioniereinrichtung mit der Möglichkeit zur Positionierung der Kontaktelemente in zwei Achsen regelmäßig zu warten und ggf. Bauteile der jeweiligen Antriebe auszuwechseln.

Aus der US 2003/0162448 A1 sind eine Kontaktvorrichtung und eine Ladekontakteinheit zum Laden eines elektrisch angetriebenen Fahrzeuges bekannt. Die D1 zeigt eine Kontaktvorrichtung, die am Fahrzeug angeordnet und mittels einer Positioniereinrichtung in horizontaler und vertikaler Richtung bewegbar ausgebildet ist. Die Positioniereinrichtung weist insbesondere eine Führungseinrichtung zur horizontalen Bewegung der Kontaktvorrichtung auf. Die Ladekontakteinheit ist als eine starre, fest an einem Untergrund montierte Säule ausgebildet.

Die WO 03/068666 A1 zeigt eine Kontaktvorrichtung und eine Ladekontakteinheit zum Laden eines elektrisch angetriebenen Fahrzeugs. Die Kontaktvorrichtung weist eine steckerartige Kontakteinrichtung mit Kontaktelementen auf, die an einer höhenverstellbaren Säule verschwenkbar und über einen Teleskoparm in einer horizontalen Richtung bewegbar ist. Neben der Kontaktierung einer Ladekontakteinheit bzw. Ladestation ist es auch möglich, die Kontakteinrichtung der Kontaktvorrichtung in einer taschenförmigen Aufnahme am Fahrzeug zu verwahren, die unterhalb des Fahrzeugs befestigt werden kann. Die Kontakteinrichtung kann verschwenkt und über den Teleskoparm in die Tasche eingeführt werden.

Der vorliegenden Erfindung liegt daher die Aufgabe zugrunde, ein Schnellladesystem sowie ein Verfahren zur Lagerung einer Kontaktvorrichtung an einer Lagervorrichtung vorzuschlagen, welches eine sichere Überdachkontaktierung bei einem gleichzeitig kostengünstigen Betrieb des Verkehrsmittels ermöglicht.

Diese Aufgabe wird durch ein Schnellladesystem mit den Merkmalen des Anspruchs 1 sowie ein Verfahren mit den Merkmalen des Anspruchs 16 gelöst.

Bei dem erfindungsgemäßen Schnellladesystem für elektrisch angetriebene Fahrzeuge, insbesondere Elektrobusse oder dergleichen, mit einer Kontaktvorrichtung und einer Lagervorrichtung zur Lagerung der Kontaktvorrichtung, dient die Kontaktvorrichtung zur Ausbildung einer elektrischen leitenden Verbindung zwischen einem Fahrzeug und einer stationären Ladestation mit einer Ladekontakteinheit, wobei die Kontaktvorrichtung und die Lagervorrichtung an einem Fahrzeug anordbar sind, wobei die Kontaktvorrichtung eine Kontakteinrichtung umfasst, wobei mit der Kontakteinrichtung die Ladekontakteinheit kontaktierbar ist, wobei die Kontaktvorrichtung eine Positioniereinrichtung umfasst, wobei mittels der Positioniereinrichtung die Kontakteinrichtung relativ zur Ladekontakteinheit und zum Fahrzeug in vertikaler und horizontaler Richtung positionierbar und von einer Kontaktposition an der Ladekontakteinheit in eine Lagerposition an der Lagervorrichtung am Fahrzeug bringbar ist, wobei die Kontakteinrichtung mittels der Positioniereinrichtung der Lagervorrichtung in vertikaler Richtung zuführbar ist, wobei die Positioniereinrichtung einen Pantografen oder eine Schwinge zur Positionierung der Kontakteinrichtung in der vertikalen Richtung relativ zur Ladekontakteinheit und/oder zu dem Fahrzeug aufweist, wobei die Lagervorrichtung eine Aufnahmeöffnung mit einer Führungseinrichtung ausbildet, mittels der die Kontakteinrichtung in der vertikalen und der horizontalen Richtung in der Lagerposition positionierbar ist, wobei die Führungseinrichtung zur Führung der Kontakteinrichtung bei einer vertikalen Abwärtsbewegung der Kontakteinrichtung in die Lagerposition ausgebildet ist.

So kann bei einem Halt, beispielsweise eines Elektrobusses, an einer Haltestelle mittels der Positioniereinrichtung die Kontakteinrichtung bewegt und in einer vertikalen und horizontalen Richtung der Ladekontakteinheit angenähert und mit dieser zusammengeführt werden. Ein derart ausgebildeter Ladekontakt zwischen Ladestation und Fahrzeug umfasst zumindest zwei Kontaktpaarungen von jeweils einem Kontaktelement und einem zugehörigen Ladekontaktelement der Ladekontakteinheit.

Die Ladekontakteinheit kann eine Aufnahmeöffnung für die Kontakteinrichtung ausbilden, wobei die Kontakteinrichtung in die Aufnahmeöffnung der Ladekontakteinheit einsetzbar sein kann. Dabei kann die Aufnahmeöffnung vorzugsweise V-förmig ausgebildet sein. Bei einer Relativabweichung des Kontaktelementträgers bei einem Zusammenführen von Kontakteinrichtung und Ladekontakteinheit zur Aufnahmeöffnung bewirkt dann die V-förmige Ausbildung der Aufnahmeöffnung eine Zentrierung des Kontaktelementträgers.

So kann die Aufnahmeöffnung bei einem Zusammenführen von Kontakteinrichtung und Ladekontakteinheit eine Führung für die Kontakteinrichtung ausbilden. Eventuelle Lageabweichungen des Fahrzeugs bei einem Halt an einer Haltestelle von einer vorgesehenen Halteposition können so durch die durch die Aufnahmeöffnung bewirkte Führung des Kontaktelementträgers in eine Kontaktposition an der Ladekontakteinheit leicht ausgeglichen werden.

Es ist jedoch dann ggf. erforderlich, die Lageabweichung des Kontaktelementträgers bzw. der Kontakteinrichtung relativ zum Fahrzeug für eine erneute Kontaktierung an der nächsten Haltestelle wieder zu korrigieren. Ansonsten könnte bei der vorbeschriebenen Art der Kontaktierung der Fall eintreten, dass aufgrund der Lageabweichung des Fahrzeugs zur Ladekontakteinheit und einer Lageabweichung der Kontakteinrichtung relativ zum Fahrzeug eine Kontaktierung überhaupt nicht möglich ist, da die Kontakteinrichtung nicht unterhalb der Ladekontakteinheit angeordnet ist. Dem könnte zwar mit einer motorischen Positionierung der Kontakteinrichtungen in horizontaler Richtung quer zur Fahrtrichtung des Fahrzeugs abgeholfen werden, dies bringt jedoch die eingangs beschriebenen Nachteile mit sich. Dadurch, dass die Lagervorrichtung zur Lagerung der Kontaktvorrichtung verwendet wird, und die Lagervorrichtung eine Positionierung der Kontakteinrichtung in der horizontalen Richtung quer zur Fahrtrichtung ermöglicht erübrigt sich die motorische Positionierung in horizontaler Richtung. Dies wird insbesondere dadurch bewirkt, dass die Lagervorrichtung die Aufnahmeöffnung mit der Führungseinrichtung ausbildet. Die Kontakteinrichtung, die mittels der Positioniereinrichtung in vertikaler Richtung der Lagervorrichtung zugeführt wird, gelangt in die Aufnahmeöffnung und wird mittels der Führungseinrichtung bei der vertikalen Abwärtsbewegung in die Lagerposition geführt. Es ist daher nicht mehr erforderlich, einen motorischen Antrieb oder eine andere Art von Antrieb zur lagerichtigen Positionierung der Kontakteinrichtung in der Lagerposition vorzusehen. Gleichzeitig wird durch die Lagerung der Kontaktvorrichtung bzw. Kontakteinrichtung in der Lagerposition die Kontakteinrichtung für eine Kontaktierung an nachfolgenden Haltestellen so positioniert, dass die Kontakteinrichtung immer unterhalb einer Ladekontakteinheit positioniert ist. Insgesamt wird so mit der Lagervorrichtung und der in der Lagervorrichtung lagerbaren Kontaktvorrichtung eine Lösung zur horizontalen Positionierung bzw. Ausrichtung der Kontakteinheit relativ zur Ladekontakteinheit geschaffen, die gegenüber einem horizontalen Antrieb vergleichsweise kostengünstig und wenig ausfallanfällig ist.

Die Kontakteinrichtung kann mittels der Führungseinrichtung relativ zu dieser zentrierbar sein. Die Führungseinrichtung kann demnach so ausgeformt sein, dass die Kontakteinrichtung quer zur Fahrtrichtung des Fahrzeugs an der Führungseinrichtung mittig ausgerichtet bzw. zentriert wird, wenn die Kontakteinrichtung in die Lagervorrichtung abgesenkt wird. Folglich kann die Führungseinrichtung auch achsensymmetrisch ausgebildet sein.

In einer Ausführungsform kann die Führungseinrichtung eine V-förmige Aufnahmeöffnung zur Führung der Kontakteinrichtung in die Lagerposition ausbilden. Die Kontakteinrichtung wird dann bei einem Absenken in die V-förmige Aufnahmeöffnung, unabhängig von einer Position oberhalb der Aufnahmeöffnung, in einem mittleren Bereich der Aufnahmeöffnung bzw. in die Lagerposition mittels der Führungseinrichtung geleitet. Prinzipiell kann die Aufnahmeöffnung auch eine andere, zum Zwecke der Positionierung der Kontakteinrichtung geeignete Form aufweisen, die die Kontakteinrichtung der Lagerposition zuführen kann.

Darüber hinaus kann die Führungseinrichtung in der Lagerposition eine Linearführung in vertikaler Richtung ausbilden. Insbesondere, wenn eine Aufnahmeöffnung an der Führungseinrichtung ausgebildet ist, kann die Linearführung Teil der Aufnahmeöffnung sein. Durch die Linearführung kann sichergestellt werden, dass die Kontakteinrichtung nach einer horizontalen Positionierung noch einmal in vertikaler Richtung abgesenkt wird, wodurch dann eine ggf. ungewollte horizontale Verschiebung der Kontakteinrichtung in Folge von Fahrzeugbewegungen oder dergleichen sicher vermieden werden kann. Durch die Linearführung wird die Kontakteinrichtung demnach formschlüssig in der Lagerposition in horizontaler Richtung fixiert.

Die Führungseinrichtung kann beispielsweise aus Kunststoff oder Metall bestehen und durch ein oder mehrere Bleche, Profile oder Ähnlichem, wie beispielsweise Rohrprofile, besonders einfach und kostengünstig ausgebildet sein.

Vorteilhaft ist es, wenn die Lagervorrichtung eine Reinigungseinrichtung für die Kontakteinrichtung aufweist, die so angeordnet und ausgebildet sein kann, dass Kontaktelemente der Kontakteinrichtung vor oder nach einer Bewegung der Kontakteinrichtung in die Lagerposition mit der Reinigungseinrichtung in Kontakt gelangen können. Dann kann zumindest bei jedem Absenken bzw. Ablegen der Kontakteinrichtung in der Lagerposition eine Reinigung von Kontaktelementen der Kontakteinrichtung erfolgen. Gleiches ist bei einer vertikalen Bewegung der Kontakteinrichtung aus der Lagerposition in eine Kontaktposition möglich. Eventuelle an den Kontaktelementen befindliche Verunreinigungen, die eine Ausbildung einer elektrischen Kontaktverbindung beinträchtigen könnten, können so regelmäßig und ohne größeren Aufwand von den Kontaktelementen entfernt werden, was eine Betriebssicherheit der Kontakteinrichtung wesentlich erhöht.

Insbesondere kann die Reinigungsvorrichtung eine Bürste und/oder ein Abstreifer sein. Dabei kann unter anderem auch vorgesehen sein, dass die Bürste und/oder der Abstreifer eine abrasive Wirkung gegenüber den Kontaktelementen hat. Beispielsweise kann der Abstreifer aus einem gummiartigen Material mit abrasiven Partikeln ausgebildet sein. Dadurch kann neben einer Reinigung der Oberflächen der Kontaktelemente beispielsweise auch eine auf den Oberflächen befindliche Oxidschicht zumindest teilweise entfernt werden.

Wesentlich bei der Kontaktvorrichtung des erfindungsgemäßen Schnellladesystems ist, dass diese die Kontakteinrichtung aufweist, die zur Führung durch die Führungseinrichtung der Lagervorrichtung ausgebildet ist. Die Kontakteinrichtung weist daher eine Gestalt bzw. Elemente auf, die zur Anlage an der Führungseinrichtung gelangen können, so dass die Kontakteinrichtung von der Führungseinrichtung in die Lagerposition geführt werden kann.

Die Positioniereinrichtung weist erfindungsgemäß einen Pantografen oder eine Schwinge auf, mittels dem bzw. der die Kontakteinrichtung in vertikaler Richtung relativ zur Ladekontakteinheit bzw. zu dem Fahrzeug positioniert werden kann. Bei einer Schwinge kann ein ergänzendes Koppelgetriebe vorgesehen sein, welches die Kontakteinrichtung relativ zur Ladekontakteinheit stabilisiert bzw. in der betreffenden Richtung ausrichtet. Ein Pantograf oder eine Schwinge bzw. ein entsprechender mechanischer Antrieb ist besonders einfach und kostengünstig herstellbar.

Die Positioniereinrichtung kann weiter eine Querführung aufweisen, mittels der die Kontakteinrichtung quer relativ zur Ladekontakteinheit bzw. zur Fahrtrichtung des Fahrzeugs positioniert werden kann. Die Querführung kann dann an dem Pantografen oder der Schwinge der Positioniereinrichtung angeordnet sein. In beiden Fällen ist dann die an der Querführung angeordnete Kontakteinrichtung quer zur Fahrtrichtung des Fahrzeugs verschiebbar. Durch diese Verschiebbarkeit kann beispielsweise eine fehlerhafte Positionierung des Fahrzeugs an einer Haltestelle quer zur Fahrtrichtung ausgeglichen werden. Darüber hinaus werden eventuelle Fahrzeugbewegungen in Folge eines einseitigen Absenkens des Fahrzeugs zum Ein- und Aussteigen von Personen so ausgeglichen, dass es zu keiner Verschiebung des Kontaktelementträgers relativ zur Ladekontakteinheit in Querrichtung kommen kann.

Die Querführung kann an einem distalen Ende des Pantografen oder der Schwinge angeordnet sein. Dadurch ist es nicht mehr erforderlich, dass die Schwinge bzw. der Pantograf quer zur Fahrtrichtung bewegt wird, sondern es ist ausreichend, allein die Kontakteinrichtung an der Querführung zu bewegen. Dadurch verringert sich eine zu bewegende Masse. Auch wird dann ein geringeres Drehmoment bzw. keine wesentlichen Querkräfte mehr auf einen Pantografen oder eine Schwinge ausgeübt. Vorzugsweise kann die Querführung an dem distalen, oberen Ende des Pantografen oder der Schwinge unmittelbar fest montiert sein, sodass die Kontakteinrichtung dann leicht an der Querführung bewegt werden kann.

Die Querführung kann als eine geradförmige Linearführung oder auch als eine bogenförmige Linearführung ausgebildet sein. Die bogenförmige Linearführung kann dann einen Radius eines Bogens aufweisen, der einer Höhe der Querführung über einem Fahrweg entspricht.

Besonders vorteilhaft ist es, wenn die Kontakteinrichtung frei verschieblich an der Querführung angeordnet ist. Durch die frei verschiebliche Anordnung der Kontakteinrichtung wird ein Ausgleich bei einem Verkippen des Fahrzeugs quer zur Fahrtrichtung durch ein einseitiges Absenken erheblich vereinfacht. Bei dem Verkippen wird dann die Positioniereinrichtung seitlich, d. h. quer zur Fahrtrichtung geneigt, wobei die Kontakteinrichtung mit der Ladekontakteinheit verbunden bleibt und an der Querführung verschoben wird. Die Querführung kann dabei so ausgestaltet sein, dass diese als eine Führungsschiene oder mit Führungsprofilen für die Kontakteinrichtung ausgebildet ist.

Weiter kann vorgesehen sein, dass die Kontakteinrichtung einen Kontaktelementträger mit Kontaktelementen aufweist. Die Kontaktelemente können dabei so ausgebildet sein, dass diese mit Ladekontaktelementen der Ladekontakteinheit jeweils zur Ausbildung von Kontaktpaarungen kontaktierbar sind.

Wenn die Kontakteinrichtung auf der Querführung ggf. verschoben wurde, kann der Kontaktelementträger auf der Querführung wieder dadurch zentriert werden, dass dieser mittels der Führungseinrichtung auf der Querführung ausgerichtet bzw. in einer Ruhelage in der Lagerposition zentriert wird.

Die Ladekontakteinheit kann aus einem Ladekontaktelementträger und den Ladekontaktelementen gebildet sein, wobei der Ladekontaktelementträger aus einem Kunststoffmaterial ausgebildet sein kann. Die Ladekontakteinheit ist dann besonders kostengünstig und einfach herstellbar. So kann der Ladekontaktelementträger auch aus Kunststoff einstückig ausgebildet sein. Die Ladekontaktelemente können dann in den Ladekontaktelementträger bzw. in dafür vorgesehene Halterungen oder Ausnehmungen eingesetzt werden.

Weiter kann die Ladekontakteinheit als eine in Fahrtrichtung des Fahrzeugs anordbare, dachförmige Längsschiene ausgebildet sein. Die Ladekontaktelemente können dann an einer Unterseite der dachförmigen Längsschiene angeordnet sein, sodass die Ladekontaktelemente nicht unmittelbar Witterungseinflüssen ausgesetzt sind. Auch kann die dachförmige Längsschiene vergleichsweise lang ausgebildet sein, sodass eine genaue Positionierung des Fahrzeugs an einer Haltestelle nicht mehr notwendig ist. Auch kann die dachförmige Längsschiene an ihren Enden vorzugsweise offen ausgebildet sein, sodass der Kontaktelementträger auch in Fahrtrichtung in die dachförmige Längsschiene eingeführt bzw. herausgezogen werden kann.

In einer Ausführungsform kann die Kontakteinrichtung auf einem Fahrzeugdach angeordnet sein. Beispielsweise kann es sich dabei um ein Fahrzeugdach eines Elektrobusses oder auch eines Straßenbahnwagens handeln. Dabei kann beispielsweise auch vorgesehen sein, die Kontakteinrichtung so auf dem Fahrzeugdach zu positionieren, dass diese in Fahrtrichtung auf einer Fahrerseite des Fahrzeugdaches angeordnet ist. Einem Fahrer des Fahrzeuges wird so eine Positionierung der Kontaktvorrichtung unterhalb einer Ladekontakteinheit wesentlich vereinfacht, da diese bzw. deren Lage in Blickrichtung des Fahrers liegt.

Der Kontaktelementträger kann zwei, vorzugsweise drei oder mehr Positionierflächen ausbilden, die übereinstimmend mit Führungsflächen der Führungseinrichtung zur Führung des Kontaktelementträgers ausgebildet sind. Die Positionierflächen des Kontaktelementträgers können sich dann an die Führungsflächen der Führungseinrichtung anschmiegen, sodass bei einer Zusammenführung von Kontakteinrichtung und Lagervorrichtung der Kontaktelementträger in seine in der Lagervorrichtung vorgesehene Position lagerichtig positioniert werden kann. Die Führungsflächen können insbesondere eine Geometrie bzw. Relativanordnung zueinander aufweisen, die mit den Positionierflächen so übereinstimmt, dass ein sicheres Einführen der Kontakteinrichtung in die Lagervorrichtung in eine definierte Lagerposition gewährleistet ist.

Der Kontaktelementträger kann auch zwei Wälzkörper aufweisen, die zur Anlage an bzw. mit einer Führungsbahn der Führungseinrichtung ausgebildet sind. Die Wälzkörper können beispielsweise jeweils als Rad oder in Art einer Rolle ausgebildet sein. Der Kontaktelementträger muss so nicht mehr an Führungsflächen entlang gleiten, sondern kann ohne einen großen Reibwiderstand einfach entlang der Führungsbahn abrollen. Ein Abrieb an der Führungsbahn wird dadurch minimiert und eine Beschädigung des Kontaktelementträgers weitestgehend vermieden. So können die Wälzkörper am Kontaktelementträger dann auch leicht ausgewechselt werden, sofern diese verschlissen sind.

Besonders vorteilhaft ist es, wenn die Positioniereinrichtung der Kontaktvorrichtung einen Schwenkmechanismus aufweist, mittels dem der Kontaktelementträger relativ zu einer Hochachse des Kontaktelementträgers neigbar ist. Insbesondere wenn eine Höhe des Kontaktelementträgers größer ist als seine Breite oder Tiefe, ist es vorteilhaft, wenn der Kontaktelementträger relativ zu der Hochachse des Kontaktelementträgers, und damit auch relativ zu einem horizontalen Fahrzeugdach, geneigt werden kann. So kann der Kontaktelementträger das Fahrzeugdach so weit überragen, dass sich eine Höhe des betreffenden Fahrzeugs wesentlich vergrößert. Dies ist jedoch prinzipiell unerwünscht, da dann ggf. Durchfahrten von Brücken, Unterführungen oder dergleichen nicht mehr genutzt werden können. Weiter werden auch die aerodynamischen Eigenschaften des Fahrzeugs durch den Kontaktelementträger möglicherweise verschlechtert. Wenn der Kontaktelementträger geneigt werden kann, werden die vorgenannten Nachteile zumindest teilweise oder auch vollständig kompensiert. Insbesondere kann vorgesehen sein, den Kontaktelementträger in einem Winkel von 45°, bevorzugt 30° und besonders bevorzugt 0° relativ zu einem Fahrzeugdach neigbar auszuführen.

Der dazu eingesetzte Schwenkmechanismus kann als ein Hebelgetriebe der Positioniereinrichtung ausgebildet sein. Dass Hebelgetriebe kann dann eine Bewegung der Positioniereinrichtung beim Absenken des Kontaktelementträgers in die Lagerposition in eine Schwenkbewegung umsetzen. Dadurch kann auf einen zusätzlichen Antrieb zum Schwenken bzw. Neigen der Kontaktvorrichtung verzichtet werden. Das Hebelgetriebe kann auch als ein Kurvengetriebe mit einem Hebel und einer Kurvenscheibe ausgebildet sein.

Mittels des Schwenkmechanismus kann der Kontaktelementträger in der Kontaktposition orthogonal relativ zu der Lagekontakteinheit und in der Lagerposition geneigt relativ zu einem horizontalen Fahrzeugdach ausrichtbar sein. In Verbindung mit der Lagervorrichtung kann der Kontaktelementträger dann beim Kontaktieren mit der Führungseinrichtung geneigt sein.

Das Schnellladesystem kann auch eine Ladestation und eine Ladekontakteinheit umfassen.

Bei dem erfindungsgemäßen Verfahren zur Lagerung einer Kontaktvorrichtung an einer Lagervorrichtung eines Schnellladesystems für elektrisch angetriebene Fahrzeuge, insbesondere Elektrobusse oder dergleichen, mit einer Kontaktvorrichtung und einer Lagervorrichtung, sind die Kontaktvorrichtung und die Lagervorrichtung an einem Fahrzeug angeordnet, wobei die Kontaktvorrichtung eine Kontakteinrichtung umfasst, wobei mit der Kontakteinrichtung eine Ladekontakteinheit kontaktiert wird, wobei die Kontaktvorrichtung eine Positioniereinrichtung umfasst, wobei mittels der Positioniereinrichtung die Kontakteinrichtung relativ zur Ladekontakteinheit und zum Fahrzeug in vertikaler und horizontaler Richtung positioniert wird und von einer Kontaktposition an der Ladekontakteinheit in eine Lagerposition an der Lagervorrichtung am Fahrzeug gebracht wird, wobei die Kontakteinrichtung mittels der Positioniereinrichtung der Lagervorrichtung in vertikaler Richtung zugeführt wird, wobei die Kontakteinrichtung mit einem Pantografen oder einer Schwinge der Positioniereinrichtung in der vertikalen Richtung relativ zur Ladekontakteinheit und/oder zu dem Fahrzeug positioniert wird, wobei die Lagervorrichtung eine Aufnahmeöffnung mit einer Führungseinrichtung ausbildet, wobei mittels der Führungseinrichtung die Kontakteinrichtung in der vertikalen und der horizontalen Richtung bei einer vertikalen Abwärtsbewegung der Kontakteinrichtung in die Lagerposition geführt und positioniert wird. Hinsichtlich der vorteilhaften Wirkungen des erfindungsgemäßen Verfahrens wird auf die Vorteilsbeschreibung der erfindungsgemäßen Lagervorrichtung bzw. Kontaktvorrichtung verwiesen.

Folglich sieht das Verfahren vor, dass nach einer Verschiebung der Kontaktvorrichtung in horizontaler Richtung relativ zu einer Fahrtrichtung des Fahrzeugs in Folge einer Kontaktierung bzw. Zusammenführung mit der Ladekontakteinheit die Kontakteinrichtung bei einem Lösen des Kontaktes mit der Ladekontakteinheit und einer Rückführung in die Aufnahmeöffnung der Lagervorrichtung die Kontakteinheit in die Lagerposition bzw. ursprüngliche Position vor einer vertikalen Bewegung bzw. Positionierung der Kontakteinrichtung zurückgeführt wird. Die Ausrichtung bzw. Positionierung der Kontakteinrichtung erfolgt dabei stets immer bei einem Zurückführen in die Lagervorrichtung, wenn die Kontakteinrichtung durch die Kontaktierung mit der Ladekontakteinheit in der horizontalen Richtung bewegt wurde.

Weitere vorteilhafte Ausführungsformen des Verfahrens ergeben sich aus den auf die Hauptansprüche 1 und 7 jeweils rückbezogenen Unteransprüchen.

Nachfolgend wird eine bevorzugte Ausführungsform der Erfindung unter Bezugnahme auf die beigefügte Zeichnung näher erläutert.

Es zeigen:
- **Fig. 1**: eine Ausführungsform eines Schnellladesystems in einer Seitenansicht;
- **Fig. 2**: das Schnellladesystem in einer Vorderansicht;
- **Fig. 3**: eine Ladekontakteinheit des Schnellladesystems in einer perspektivischen Ansicht;
- **Fig. 4**: die Ladekontakteinheit in einer Querschnittansicht;
- **Fig. 5**: einen Kontaktelementträger einer Kontaktvorrichtung des Schnellladesystems in einer perspektivischen Ansicht;
- **Fig. 6**: eine Schnittansicht des Kontaktelementträgers entlang einer Linie **VI - VI** aus **Fig. 9**;
- **Fig. 7**: eine Vorderansicht des Kontaktelementträgers;
- **Fig. 8**: eine Seitenansicht des Kontaktelementträgers;
- **Fig. 9**: eine Draufsicht des Kontaktelementträgers;
- **Fig. 10**: eine Querführung der Kontaktvorrichtung des Schnellladesystems in einer perspektivischen Ansicht;
- **Fig. 11**: eine zweite Ausführungsform eines Schnellladesystems in einer Vorderansicht;
- **Fig. 12**: eine dritte Ausführungsform eines Schnellladesystems in einer perspektivischen Ansicht;
- **Fig. 13**: die dritte Ausführungsform des Schnellladesystems in einer Vorderansicht;
- **Fig. 14**: eine vierte Ausführungsform des Schnellladesystems in einer Draufsicht;
- **Fig. 15**: die vierte Ausführungsform des Schnellladesystems in einer Vorderansicht;
- **Fig. 16**: die vierte Ausführungsform des Schnellladesystems in einer Seitenansicht;
- **Fig. 17**: eine Lagervorrichtung in einer perspektivischen Ansicht;
- **Fig. 18**: die Lagervorrichtung in einer Seitenansicht;
- **Fig. 19**: die Lagervorrichtung in einer Unteransicht;
- **Fig. 20**: die Lagervorrichtung in einer Vorderansicht.

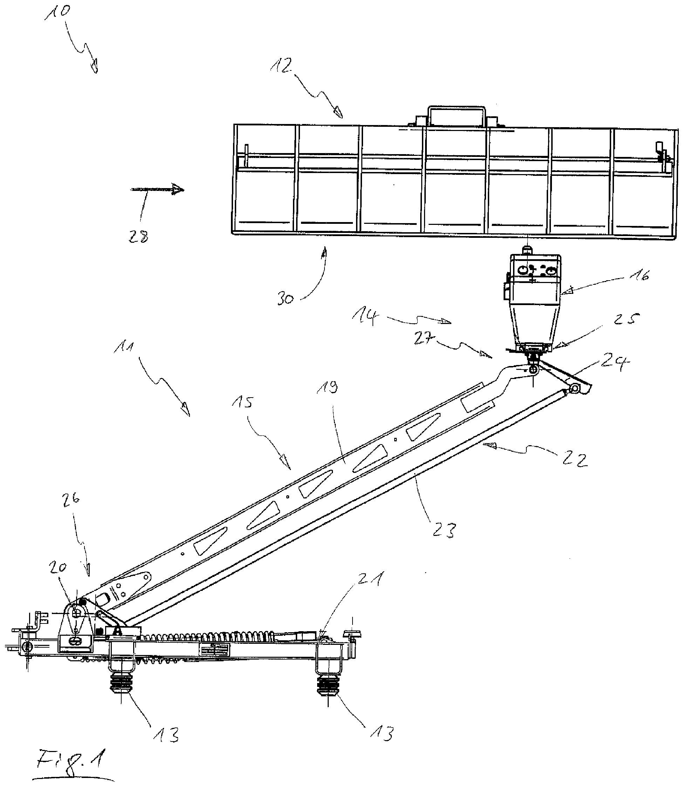

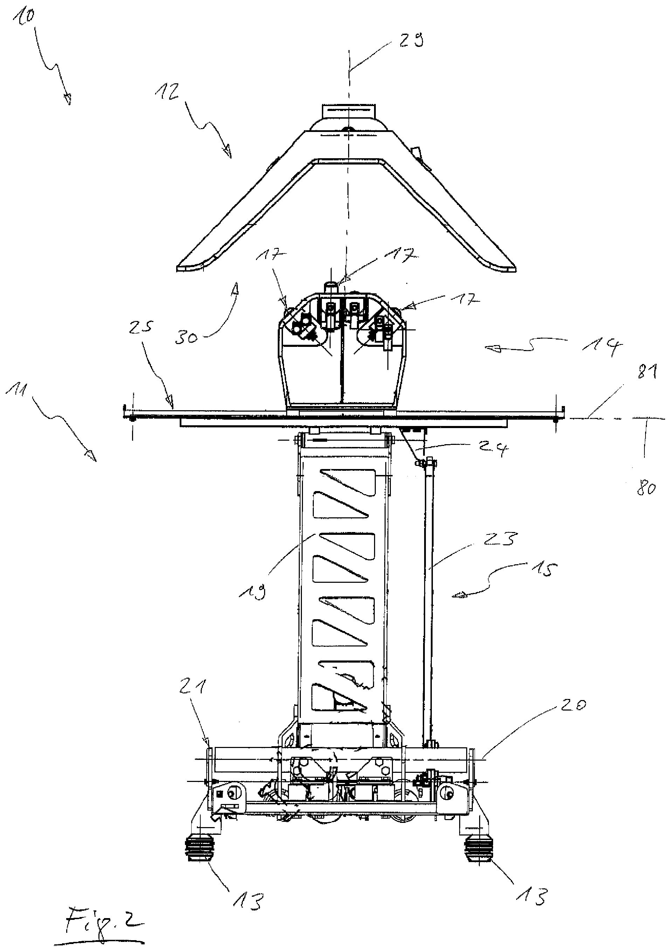

Eine Zusammenschau der **Fig. 1** und **2** zeigt ein Schnellladesystem 10, gebildet aus einer Kontaktvorrichtung 11 und einer Ladekontakteinheit 12. Eine Lagervorrichtung ist hier der Einfachheit halber nicht dargestellt, kann jedoch vorhanden sein. Die Kontaktvorrichtung 11 ist über elektrisch isolierte Füße 13 auf einem Dach eines hier nicht näher dargestellten Fahrzeugs bzw. Elektrobusses befestigt. Die Ladekontakteinheit 12 ist mittels einer hier nicht näher dargestellten Aufhängevorrichtung oberhalb des Elektrobusses im Bereich einer Haltestelle des Elektrobusses aufgehängt. Die Kontaktvorrichtung 11 umfasst eine Kontakteinrichtung 14, mit der die Ladekontakteinheit 12 kontaktierbar ist, sowie eine Positioniereinrichtung 15, mit der die Kontakteinrichtung 14 relativ zur Ladekontakteinheit 12 positioniert werden kann. Die Kontakteinrichtung 14 umfasst weiter einen Kontaktelementträger 16 mit Kontaktelementen 17, die mit Ladekontaktelementen 18 der Ladekontakteinheit 12 kontaktiert werden können. Die Positioniereinrichtung 15 weist in der hier gezeigten Ausführungsform eine Schwinge 19 auf, welche über ein Drehlager 20 an einem Befestigungsrahmen 21 der Kontaktvorrichtung 11 verschwenkt werden kann. Weiter ist ein Koppelgetriebe 22 der Positioniereinrichtung 15 vorgesehen, bei dem ein Stab 23 des Koppelgetriebes 22 an einen Hebel 24 einer Querführung 25 der Positioniereinrichtung 15 angeschlossen ist. Bei einem Verschwenken der Schwinge 19 um das Drehlager 20 an einem unteren Ende 26 der Schwinge 19 wird über das Koppelgetriebe 22 die an einem oberen Ende 27 der Schwinge 19 angeordnete Querführung 25 über das Koppelgetriebe 22 stets in einer horizontalen Lage gehalten. Demnach kann der Kontaktelementträger 16 bei dem Verschwenken auch nicht relativ zu einer horizontalen Ebene 80 verkippen. Der Kontaktelementträger 16 ist an der Querführung 25 quer zu einer hier mit Pfeil 28 angedeuteten Fahrtrichtung frei verschieblich angeordnet. So kann sichergestellt werden, dass der Kontaktelementträger 16 bei einem Zusammenführen von Kontaktelementträger 16 und Ladekontakteinheit 12 sich relativ zu einer Hochachse 29 der Ladekontakteinheit 12 frei ausrichten kann, wenn der Kontaktelementträger 16 nicht unmittelbar fluchtend mit der Hochachse 29 bei einem Halt des Elektrobusses positioniert wurde. Auch nach einem Kontaktieren der Ladekontakteinheit 12 durch Positionieren des Kontaktelementträgers 16 in einer Aufnahmeöffnung 30 der Ladekontakteinheit 12 kann der Elektrobus durch ein einseitiges Absenken relativ zur Hochachse 29 ggf. verkippt werden, wobei dann der Kontaktelementträger 16 quer zur Fahrtrichtung des Elektrobusses an der Querführung 25 frei verschoben werden kann. Insbesondere wird bei dem Absenken die Schwinge 19 um einen nicht dargestellten Winkel relativ zur Hochachse 29 verkippt.

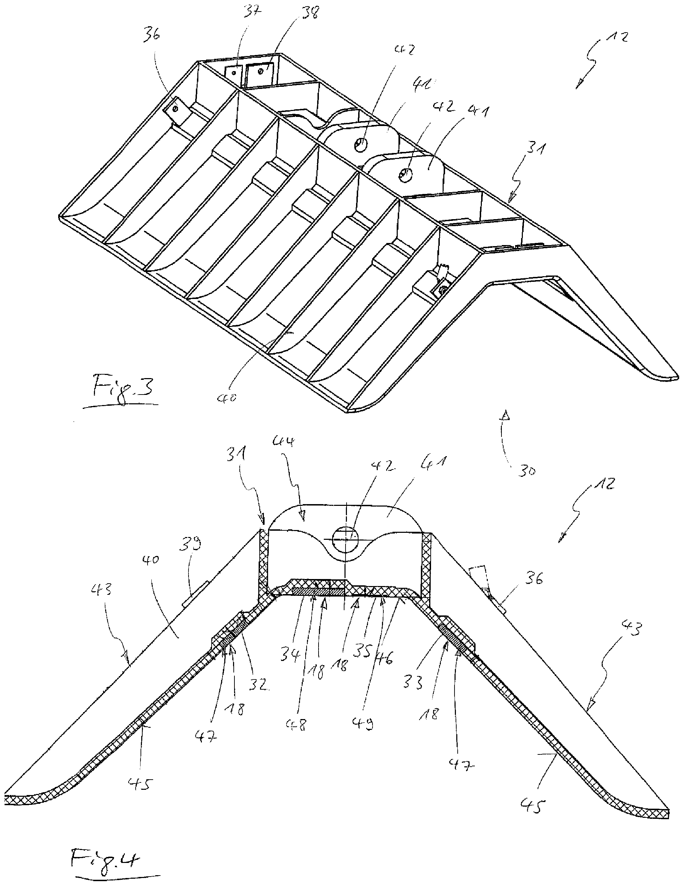

Eine Zusammenschau der Fig. 3 und 4 zeigt die Ladekontakteinheit 12, welche im Wesentlichen aus einem Ladekontaktelementträger 31 aus Kunststoffmaterial und dem Ladekontaktelement 18 ausgebildet ist. Die Ladekontaktelemente 18 sind ihrerseits jeweils als Leiterstreifen 32, 33, 34 und 35 ausgebildet und verlaufen in Längsrichtung des Ladekontaktelementträgers 31. Die Leiterstreifen 32 und 33 dienen zur Übertragung eines Ladestroms, wobei der Leiterstreifen 34 einen Schutzleiter und der Leiterstreifen 35 eine Steuerleitung repräsentiert. Im Übrigen sind Kontaktfahnen 36 bis 39 zum Anschluss an hier nicht näher dargestellte Leitungen vorgesehen. Der Ladekontaktelementträger 31 ist im Wesentlichen einstückig ausgebildet und weist unter anderem Verstärkungsrippen 40 sowie Befestigungsrippen 41 mit Durchgangsöffnungen 42 zur Aufhängung des Ladekontaktelementträgers 31 an einem hier nicht näher dargestellten Mast oder Ähnlichem auf. Die Aufnahmeöffnung 30 ist V-förmig ausgebildet, derart, dass zwei symmetrische Schenkel 43 über einen horizontalen Steg 44 miteinander verbunden sind. Die Befestigungsrippen 41 bilden unter anderem den Steg 44, und die Verstärkungsrippen 40 die Schenkel 43 aus. Innerhalb der Aufnahmeöffnung 30 bildet die Ladekontakteinheit 12 Anlageflächen 45 und 46 für den Kontaktelementträger 16 aus. Innerhalb der Anlageflächen 45 an den Schenkeln 43 sind jeweils Ausnehmungen 47 zur flächenbündigen Aufnahme der Leiterstreifen 32 bzw. 33 ausgebildet, wobei innerhalb der Anlagefläche 46 des Stegs 44 Ausnehmungen 48 und 49 zur flächenbündigen Aufnahme der Leiterstreifen 34 bzw. 35 ausgebildet sind.

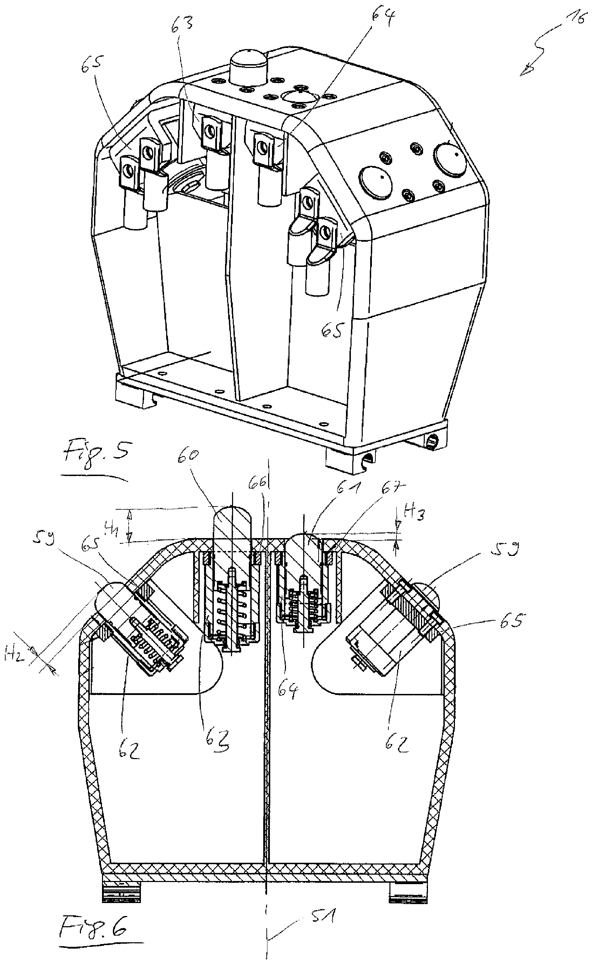

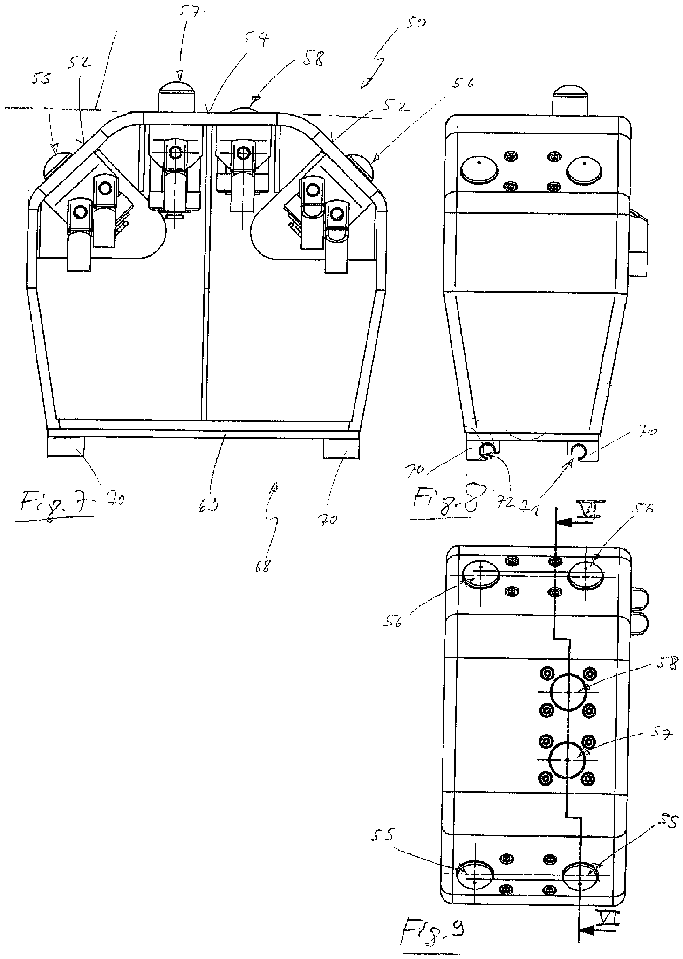

Eine Zusammenschau der Fig. 5 bis 9 zeigt den Kontaktelementträger 16 in verschiedenen Ansichten. Der Kontaktelementträger ist an einem oberen Ende 50 relativ bezogen auf eine Hochachse 51 V-förmig in Übereinstimmung mit der Aufnahmeöffnung 30 der Ladekontakteinheit 12 ausgebildet. Zwei Positionierflächen 52 sind relativ zu einer horizontalen Ebene 53 schräg ausgebildet und über eine horizontale Positionierfläche 54 untereinander verbunden. Die Positionierflächen 52 können folglich an den Anlageflächen 45 und die Positionierfläche 54 an der Anlagefläche 46 zur Anlage gelangen. Innerhalb der Positionierflächen 52 sind jeweils zwei Kontaktelemente 17 angeordnet, die als Leistungskontaktelemente 55 bzw. 56 ausgebildet sind. In der Positionierfläche 54 sind zwei Kontaktelemente 17 angeordnet, die als Schutzleiterkontaktelement 57 und Steuerleiterkontaktelement 58 ausgebildet sind. Die Leistungskontaktelemente 55 und 56 weisen elektrisch leitende Bolzen 59, das Schutzleiterkontaktelement 57 einen Bolzen 60, und das Steuerleiterkontaktelement 58 einen Bolzen 61 auf. Die Bolzen 59 bis 61 sind jeweils in Hülsen 62, 63 bzw. 64 längsbeweglich federnd gelagert. Insbesondere der Bolzen 60 überragt die Positionierfläche 54 mit einer Höhe H₁, wobei die Bolzen 59 die Positionierflächen 52 mit einer Höhe H₂ überragen und der Bolzen 61 die Positionierfläche 54 mit einer Höhe H₃ überragt. Dabei ist die Höhe H₁ größer als die Höhe H₂, und die Höhe H₂ größer als die Höhe H₃. Durch die unterschiedlichen Höhen H₁ bis H₃ bedingt, kommt es bei einem Zusammenführen von Kontaktvorrichtung 11 und Ladekontakteinheit 12, bzw. einem Einführen der Kontakteinrichtung 14 in die Aufnahmeöffnung 30, zwangsläufig zu einer definierten Kontaktreihenfolge der Bolzen 59 bis 61 mit den Leiterstreifen 32 bis 35, wobei zunächst eine erste Kontaktpaarung zwischen dem Bolzen 60 und dem Leiterstreifen 34, dann vier zweite Kontaktpaarungen über die Bolzen 59 mit den Leiterstreifen 32 und 33, und abschließend eine dritte Kontaktpaarung mit dem Bolzen 61 und dem Leiterstreifen 35 ausgebildet wird. Bei einem Absenken der Schwinge 19 werden diese Kontaktpaarungen in der umgekehrten Reihenfolge gelöst. Die Kontakteinrichtung weist im Übrigen Kontaktfahnen 65, 66 und 67 zum Anschluss von hier nicht näher dargestellten Leitungen auf. Die Kontaktfahne 65 ist mit der Hülse 62, die Kontaktfahne 66 mit der Hülse 63 und die Kontaktfahne 67 mit der Hülse 64 elektrisch leitend verbunden. An einem unteren Ende 68 der Kontakteinrichtung 14 ist eine Fußplatte 69 mit Gleitfüßen 70 angeordnet. Die Gleitfüße 70 bilden jeweils eine Halteöffnung 71 mit einer Gleitfläche 72 aus. Über die Gleitfüße 70 ist die Kontakteinrichtung 14 mit der Querführung 25 verbunden.

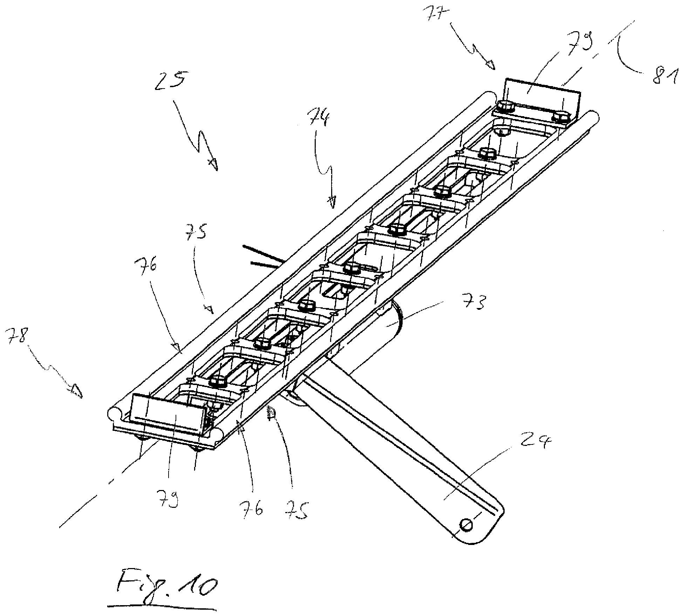

Die Fig. 10 zeigt eine perspektivische Ansicht der Querführung 25 mit dem Hebel 24 des Koppelgetriebes 22. Weiter ist eine Nabe 73 zur drehbaren Verbindung der Querführung 25 mit der Schwinge 19 vorgesehen. Die Querführung 25 ist im Wesentlichen aus einem Längsprofil 74 gebildet, welches entlang von Längskanten 75 Führungsbahnen 76 für die Gleitfüße 70 ausbildet. Die Führungsbahnen 76 haben im Wesentlichen eine runde Querschnittsform, die übereinstimmend zur Halteöffnung 71 der Gleitfüße 70 ausgebildet ist. Durch eine Dreiviertelkreisform der Halteöffnung 71 kann so gewährleistet werden, dass die Gleitfüße 70 formschlüssig mit der Führungsbahn 76 verbunden sind und entlang der Führungsbahn 76 verschoben werden können. An den jeweiligen Enden 77 und 78 des Längsprofils 74 sind Anschläge 79 befestigt, die ein Herunterschieben der Kontakteinrichtung 14 von der Querführung 25 verhindern. Die Kontakteinrichtung 14 ist so entlang einer gesamten Länge der Querführung 25 bzw. des Längsprofils 74 frei verschiebbar. Insbesondere, wenn die Querführung 25 relativ zu einer horizontalen Ebene 80 mit ihrer Längsachse 81 durch ein einseitiges Absenken eines Elektrobusses um einen Winkel verschwenkt wird, erfolgt auch eine Verschiebung des Längsprofils 74 entlang der Längsachse 81, sodass diese Verschiebung durch eine Verschiebung um den gleichen Betrag der Kontakteinrichtung entlang der Führungsbahn 76 kompensiert werden kann.

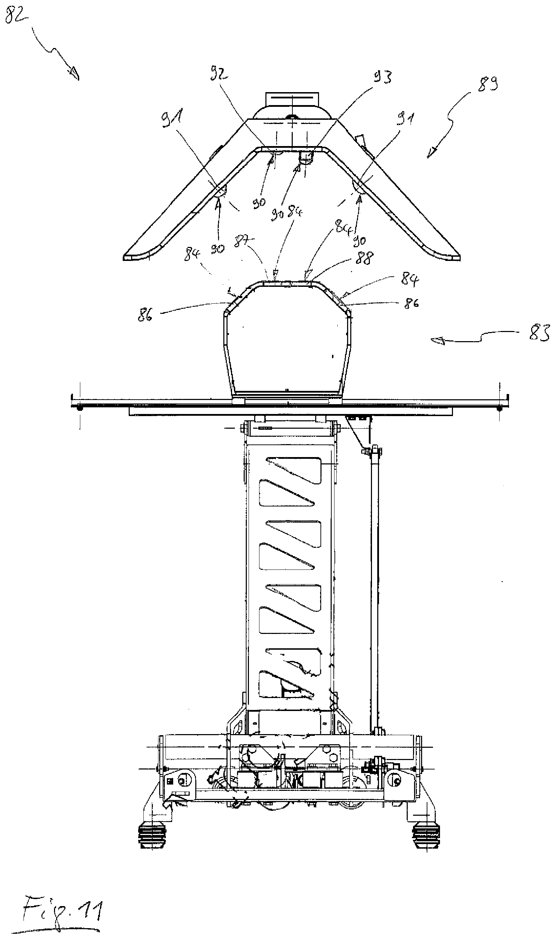

Die **Fig. 11** zeigt eine weitere Ausführungsform eines Schnellladesystems 82, welches im Unterschied zu dem in **Fig. 1** bis **10** beschriebenen Schnellladesystem eine Kontakteinrichtung 83 aufweist, die über Kontaktelemente 84 verfügt, die als Leiterstreifen 85, 86, 87 und 88 ausgebildet sind. Eine Ladekontakteinheit 89 weist Ladekontaktelemente 90 auf, die als Bolzen 91, 92 und 93 ausgebildet sind. Eine Kontaktierung kann auch hier wie zuvor beschrieben erfolgen.

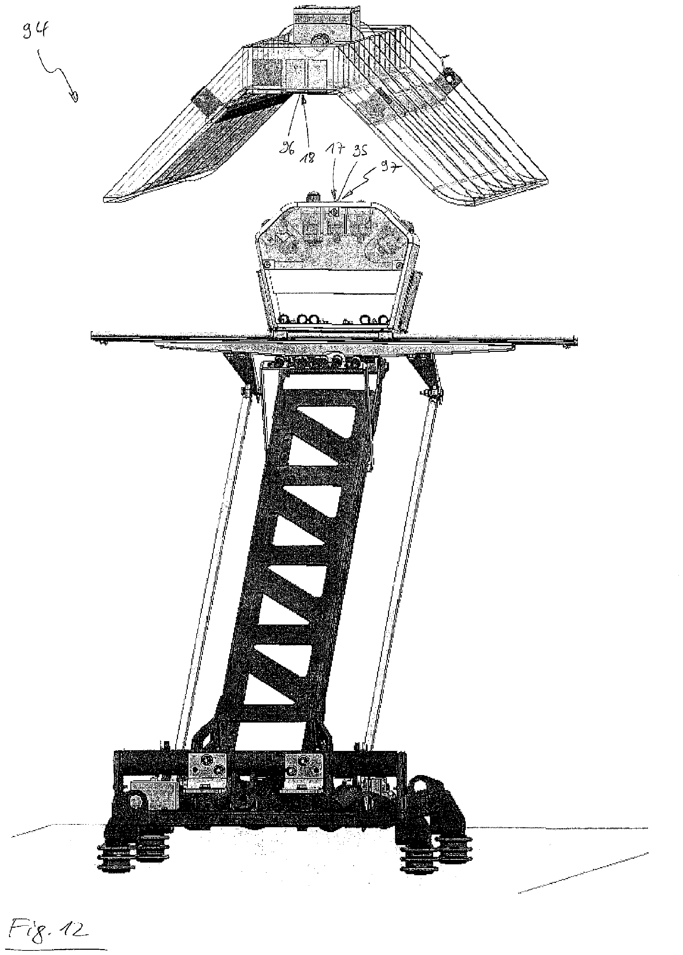

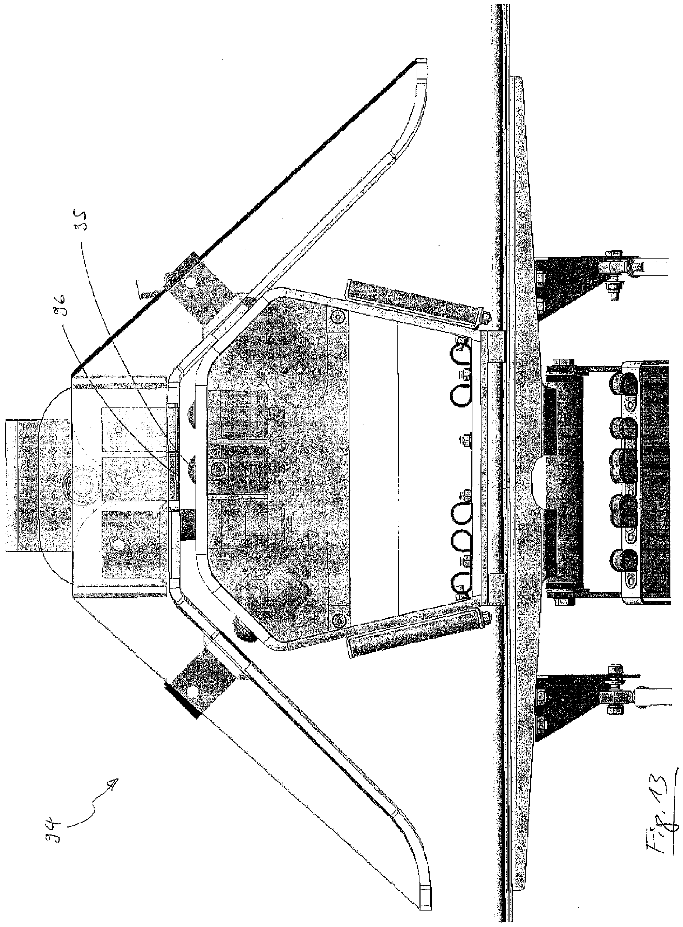

Die **Fig. 12** und **13** zeigen eine dritte Ausführungsform eines Schnellladesystems 94, welches im Unterschied zu dem in den **Fig. 1** bis **10** beschriebenen Schnellladesystem mit einem Bolzen 95 ein weiteres Kontaktelement 17 und mit einem Leiterstreifen 96 ein weiteres Ladekontaktelement 18 aufweist. Der Bolzen 95 bildet ein Verriegelungskontaktelement 97 aus. Mit dem Verriegelungskontaktelement 97 ist insbesondere eine sichere Datenverbindung mit einer stationären Ladestation herstellbar.

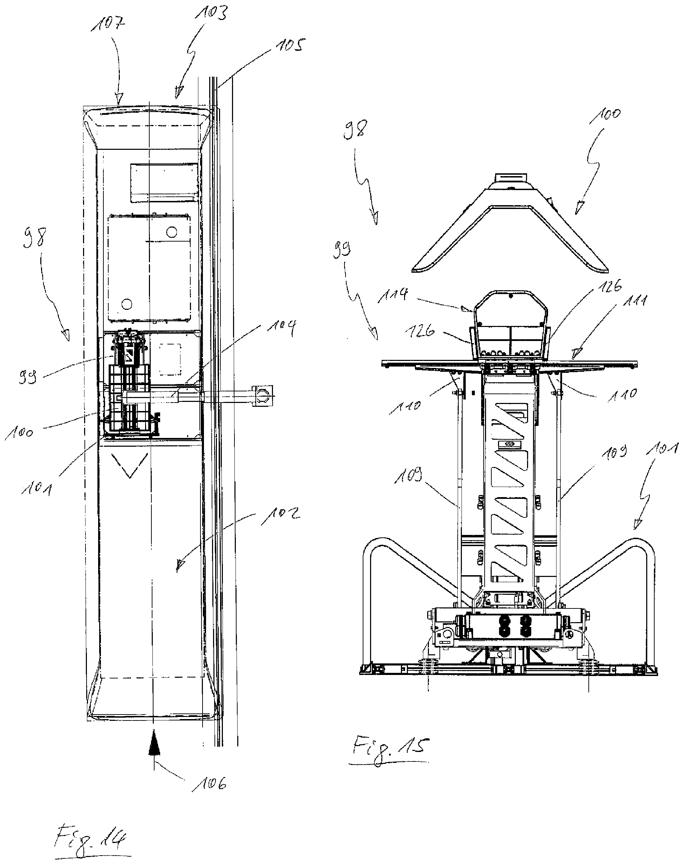

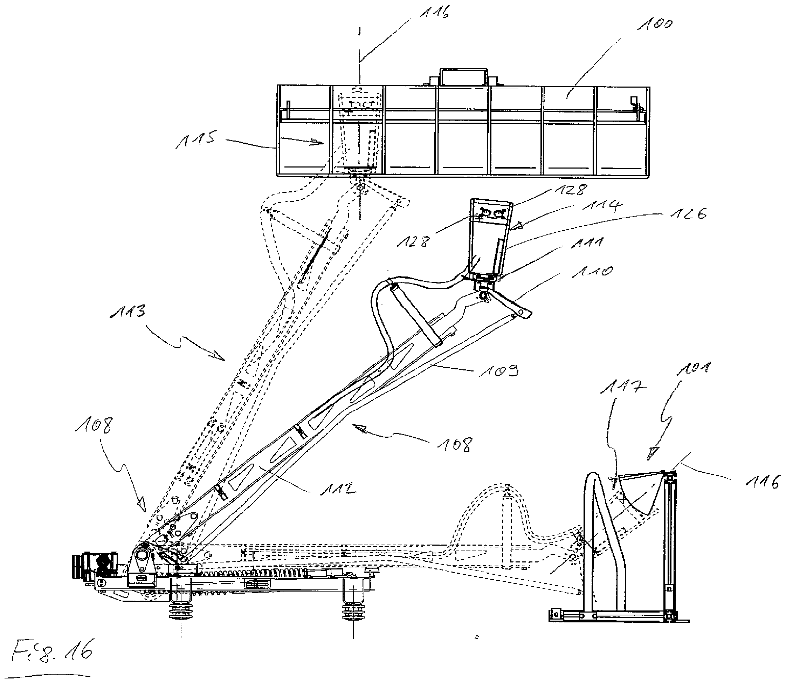

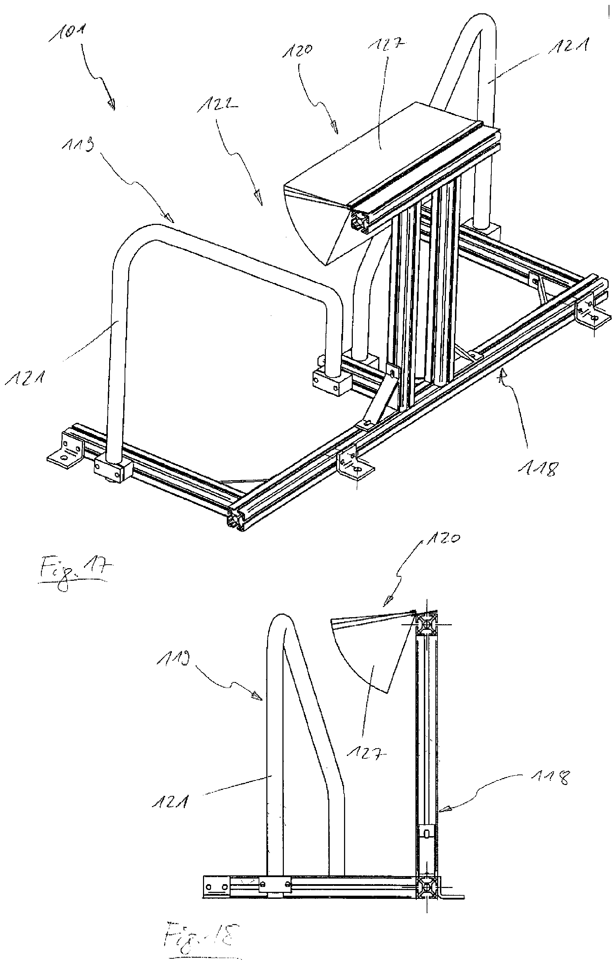

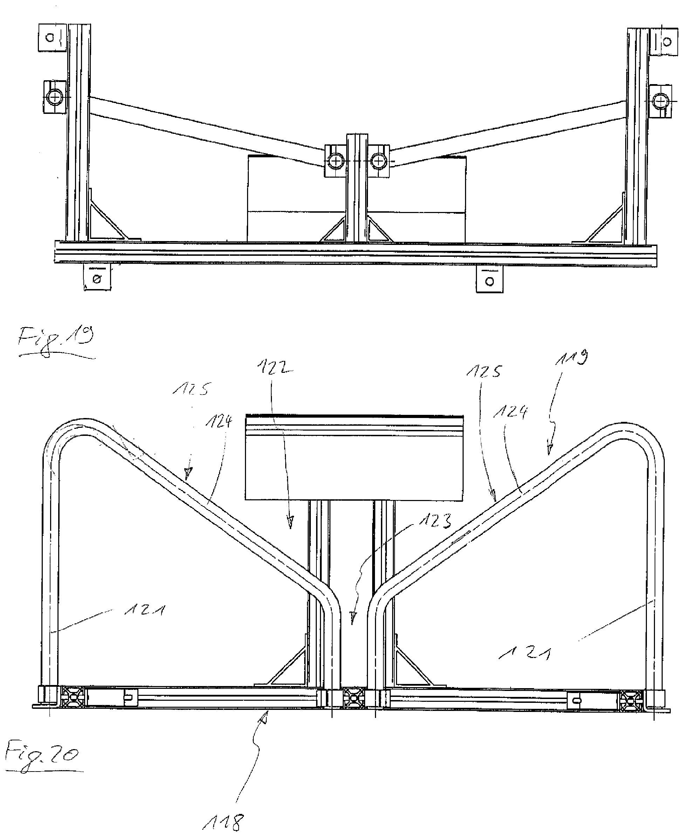

Eine Zusammenschau der **Fig. 14** bis **16** zeigt eine vierte Ausführungsform eines Schnellladesystems 98 mit einer Kontaktvorrichtung 99 und einer Ladekontakteinheit 100 in verschiedenen Ansichten. Weiter umfasst das Schnellladesystem 98 eine Lagervorrichtung 101, die in den Figuren 17 bis 20 noch einmal näher dargestellt ist. Die Kontaktvorrichtung 99 ist, wie in Figur 14 gezeigt, auf einem Dach 102 eines Fahrzeugs 103 zusammen mit der Lagervorrichtung 101 angeordnet. Die Ladekontakteinheit 100 ist an einem Mast 104 gehaltert und oberhalb der Kontaktvorrichtung 99 positioniert. Das Fahrzeug 103 ist dabei an einem Bordstein 105 bzw. parallel zu diesem abgestellt, wobei eine Fahrtrichtung des Fahrzeugs 103 mit einem Pfeil 106 gekennzeichnet ist. Die Kontaktvorrichtung 99 und die Lagervorrichtung 101 sind relativ zu der Fahrtrichtung auf einer linken Hälfte 107 des Fahrzeugs 103 angeordnet, in der sich auch ein nicht dargestelltes Steuer für das Fahrzeug 103 befindet.

Prinzipiell ist das Schnellladesystem 98 ähnlich dem in den **Fig. 1** bis **10** beschriebenen Schnellladesystem ausgebildet. Im Unterschied zu dem Schnellladesystem sind hier ein Koppelgetriebe 108 mit zwei Stäben 109 vorgesehen. Die Stäbe 109 sind jeweils mit Hebeln 110 drehbar verbunden, wobei die Hebel 110 mit einer Querführung 111, die schwenkbar an eine Schwinge 112 einer Positioniereinrichtung 113 angeordnet ist, fest verbunden sind. An der Querführung 111 ist eine Kontakteinrichtung 114 quer zur Fahrtrichtung des Fahrzeugs 103 frei verschiebbar angeordnet, wobei die Kontakteinrichtung 114 in einer oberen Kontaktposition 115 mit einer Hochachse 116 der Kontakteinrichtung 114 vertikal positioniert ist, und wobei die Kontakteinrichtung 114 in einer unteren Lagerposition 117 relativ zu dem Dach 102 des Fahrzeugs 103 mit der Hochachse 116 geneigt positioniert ist. Die Schwinge 112 ist dabei im Wesentlichen horizontal ausgerichtet.

Die Lagervorrichtung 101 ist im Wesentlichen aus einem Grundrahmen 118 zur Montage der Lagervorrichtung 101 auf dem Dach 102 des Fahrzeugs 103 sowie einer Führungseinrichtung 119 und einer Reinigungseinrichtung 120 gebildet. Die Führungseinrichtung 119 besteht aus zwei gebogenen Rohrprofilen 121, die so gebogen und angeordnet sind, dass eine V-förmige Aufnahmeöffnung 122 für die Kontakteinrichtung 114 ausgebildet wird. Weiter wird in der Lagerposition 117 eine Linearführung 123 in einer vertikalen Richtung ausgebildet. Insbesondere Rohrabschnitte 124 der Rohrprofile 121 bilden eine Führungsbahn 125 für Rollen 126, die an der Kontakteinrichtung 114 angeordnet sind, aus, so dass die Rollen 126 an den Führungsbahnen 125 abwälzen bzw. entlang gleiten können. Die Kontakteinrichtung 114 wird bei einem Absenken in die Lagerposition 117 in der Führungseinrichtung 119 mittig zentriert, derart, dass die Kontakteinrichtung 114 an der Querführung 111 ebenfalls zentriert wird. Beim Anfahren einer hier nicht gezeigten Ladekontakteinheit ist dann die Kontakteinrichtung 114 an der Querführung 111 wieder so ausgerichtet, dass die Kontakteinrichtung 114 in die entsprechende Ladekontakteinheit eingeführt werden kann.

Die Reinigungseinrichtung 120 ist im Wesentlichen aus einer Bürste 127 gebildet, die so an dem Grundrahmen 118 angeordnet ist, dass Kontaktelemente 128 mit der Bürste 127 in der Lagerposition 117 in Kontakt gelangen bzw. von der Bürste 127 jeweils bei einer Bewegung in die Lagerposition 117 und aus der Lagerposition 117 heraus gereinigt werden.

## Patentansprüche

1. Schnellladesystem (10, 82, 94, 98) für elektrisch angetriebene Fahrzeuge, insbesondere Elektrobusse oder dergleichen, mit einer Kontaktvorrichtung (11, 99) und einer Lagervorrichtung (101) zur Lagerung der Kontaktvorrichtung, wobei die Kontaktvorrichtung zur Ausbildung einer elektrischen leitenden Verbindung zwischen einem Fahrzeug und einer stationären Ladestation mit einer Ladekontakteinheit (12, 89, 100) dient, wobei die Kontaktvorrichtung und die Lagervorrichtung an einem Fahrzeug (103) anordbar sind, wobei die Kontaktvorrichtung eine Kontakteinrichtung (14, 83, 114) umfasst, wobei mit der Kontakteinrichtung die Ladekontakteinheit kontaktierbar ist, wobei die Kontaktvorrichtung eine Positioniereinrichtung (15, 113) umfasst, wobei mittels der Positioniereinrichtung die Kontakteinrichtung relativ zur Ladekontakteinheit und zum Fahrzeug in vertikaler und horizontaler Richtung positionierbar und von einer Kontaktposition (115) an der Ladekontakteinheit in eine Lagerposition (117) an der Lagervorrichtung am Fahrzeug bringbar ist, wobei die Kontakteinrichtung mittels der Positioniereinrichtung der Lagervorrichtung in vertikaler Richtung zuführbar ist,
**dadurch gekennzeichnet,**
**dass** die Positioniereinrichtung einen Pantografen oder eine Schwinge (19) zur Positionierung der Kontakteinrichtung in der vertikalen Richtung relativ zur Ladekontakteinheit und/oder zu dem Fahrzeug aufweist, wobei die Lagervorrichtung eine Aufnahmeöffnung (122) mit einer Führungseinrichtung (119) ausbildet, mittels der die Kontakteinrichtung in der vertikalen und der horizontalen Richtung bei einer vertikalen Abwärtsbewegung der Kontakteinrichtung in der Lagerposition positionierbar ist, wobei die Führungseinrichtung zur Führung der Kontakteinrichtung in die Lagerposition ausgebildet ist.

2. Schnellladesystem nach Anspruch 1,
**dadurch gekennzeichnet,**
**dass** die Kontakteinrichtung (14, 83, 114) mittels der Führungseinrichtung (119) relativ zu dieser zentrierbar ist.

3. Schnellladesystem nach Anspruch 1 oder 2,
**dadurch gekennzeichnet,**
**dass** die Führungseinrichtung (119) eine V-förmige Aufnahmeöffnung (122) zur Führung der Kontakteinrichtung (14, 83, 114) in die Lagerposition (117) ausbildet.

4. Schnellladesystem nach einem der vorangehenden Ansprüche,
**dadurch gekennzeichnet,**
**dass** die Führungseinrichtung (119) in der Lagerposition (117) eine Linearführung (123) in vertikaler Richtung ausbildet.

5. Schnellladesystem nach einem der vorangehenden Ansprüche,
**dadurch gekennzeichnet,**
**dass** die Lagervorrichtung (101) eine Reinigungseinrichtung (120) für die Kontakteinrichtung (14, 83, 114) aufweist, die so angeordnet und ausgebildet ist, dass Kontaktelemente (17, 84, 128) der Kontakteinrichtung vor und/oder nach einer Bewegung der Kontakteinrichtung in die Lagerposition (117) mit der Reinigungseinrichtung in Kontakt gelangen.

6. Schnellladesystem nach Anspruch 5,
**dadurch gekennzeichnet,**
**dass** die Reinigungseinrichtung (120) eine Bürste (127) und/oder ein Abstreifer ist.

7. Schnellladesystem nach einem der vorangehenden Ansprüche,
**dadurch gekennzeichnet,**
**dass** die Positioniereinrichtung (15, 113) eine Querführung (25, 111) aufweist, mittels der die Kontakteinrichtung (14, 83, 114) quer relativ zur Ladekontakteinheit (12, 89, 100) und zum Fahrzeug (103) positionierbar ist, wobei die Querführung an einem distalen Ende eines Pantografen oder einer Schwinge (19, 112) der Positioniereinrichtung angeordnet ist.

8. Schnellladesystem nach Anspruch 7,
**dadurch gekennzeichnet,**
**dass** die Kontakteinrichtung (14, 83, 114) frei verschieblich an der Querführung (25, 111) angeordnet ist.

9. Schnellladesystem nach einem der vorangehenden Ansprüche,
**dadurch gekennzeichnet,**
**dass** die Kontakteinrichtung (14, 83, 114) einen Kontaktelementträger (16) mit Kontaktelementen (17, 84, 128) aufweist.

10. Schnellladesystem nach Anspruch 9,
**dadurch gekennzeichnet,**
**dass** der Kontaktelementträger (16) zwei Positionierflächen ausbildet, die übereinstimmend mit Führungsflächen der Führungseinrichtung (119) zur Führung des Kontaktelementträgers ausgebildet sind.

11. Schnellladesystem nach Anspruch 9 oder 10,
**dadurch gekennzeichnet,**
**dass** der Kontaktelementträger (16) zwei Wälzkörper (126) aufweist, die zur Anlage mit einer Führungsbahn (125) der Führungseinrichtung (119) ausgebildet sind.

12. Schnellladesystem nach einem der Ansprüche 9 bis 11,
**dadurch gekennzeichnet,**
**dass** die Positioniereinrichtung (15, 113) der Kontaktvorrichtung (11, 99) einen Schwenkmechanismus aufweist, mittels dem der Kontaktelementträger (16) relativ zu einer Hochachse (116) des Kontaktelementträgers neigbar ist.

13. Schnellladesystem nach Anspruch 12,
**dadurch gekennzeichnet,**
**dass** der Schwenkmechanismus als ein Hebelgetriebe (108) der Positioniereinrichtung (15, 113) ausgebildet ist.

14. Schnellladesystem nach einem der Ansprüche 12 oder 13,
**dadurch gekennzeichnet,**
**dass** mittels des Schwenkmechanismus der Kontaktelementträger (16) in der Kontaktposition (115) orthogonal relativ zu der Ladekontakteinheit (12, 89, 100), und in der Lagerposition (117) geneigt relativ zu einem horizontalen Fahrzeugdach (102) ausrichtbar ist.

15. Schnellladesystem nach einem der vorangehenden Ansprüche,
**dadurch gekennzeichnet,**
**dass** das Schnellladesystem (10, 82, 94, 98) eine Ladestation und eine Ladekontakteinheit (12, 89, 100) umfasst.

16. Verfahren zur Lagerung einer Kontaktvorrichtung (11, 99) an einer Lagervorrichtung (101) eines Schnellladesystems (10, 82, 94, 98) für elektrisch angetriebene Fahrzeuge, insbesondere Elektrobusse oder dergleichen, mit einer Kontaktvorrichtung und einer Lagervorrichtung, wobei die Kontaktvorrichtung und die Lagervorrichtung an einem Fahrzeug (103) angeordnet sind, wobei die Kontaktvorrichtung eine Kontakteinrichtung (14, 83, 114) umfasst, wobei mit der Kontakteinrichtung eine Ladekontakteinheit (12, 89, 100) kontaktiert wird, wobei die Kontaktvorrichtung eine Positioniereinrichtung (15, 113) umfasst, wobei mittels der Positioniereinrichtung die Kontakteinrichtung relativ zur Ladekontakteinheit und zum Fahrzeug in vertikaler und horizontaler Richtung positioniert wird und von einer Kontaktposition (115) an der Ladekontakteinheit in eine Lagerposition (117) an der Lagervorrichtung am Fahrzeug gebracht wird, wobei die Kontakteinrichtung mittels der Positioniereinrichtung der Lagervorrichtung in vertikaler Richtung zugeführt wird,
**dadurch gekennzeichnet,**
**dass** die Kontakteinrichtung mit einem Pantografen oder einer Schwinge (19) der Positioniereinrichtung in der vertikalen Richtung relativ zur Ladekontakteinheit und/oder zu dem Fahrzeug positioniert wird, wobei die Lagervorrichtung eine Aufnahmeöffnung (122) mit einer Führungseinrichtung (119) ausbildet, wobei mittels der Führungseinrichtung die Kontakteinrichtung in der vertikalen und der horizontalen Richtung bei einer vertikalen Abwärtsbewegung der Kontakteinrichtung in die Lagerposition geführt und positioniert wird.

## Claims

1. A rapid charging system (10, 82, 94, 98) for electrically driven vehicles, in particular electric buses or the like, the rapid charging system comprising a contact apparatus (11, 99) and a mounting device (101) for mounting the contact apparatus, wherein the contact apparatus serves to form an electrical conductive connection between a vehicle and a stationary charging station comprising a charging contact unit (12, 89, 100), wherein the contact apparatus and the mounting device can be arranged on a vehicle (103), wherein the contact apparatus comprises a contact device (14, 83, 114), wherein the contact device can make contact with the charging contact unit, wherein the contact apparatus comprises a positioning device (15, 113), wherein the contact device can be positioned relative to the charging contact unit and to the vehicle in the vertical and horizontal direction and can be brought from a contact position (115) on the charging contact unit into a mounting position (117) on the mounting device on the vehicle by means of the positioning device, wherein the contact device can be moved toward the mounting device in the vertical direction by means of the positioning device,
**characterized in that**
the positioning device has a pantograph or a swing arm (19) for positioning the contact device in the vertical direction relative to the charging contact unit and/or to the vehicle, wherein the mounting device forms a receiving opening (122) comprising a guiding device (119), by means of which the contact device can be positioned in the mounting position in the vertical direction and in the horizontal direction as the contact device moves vertically downward, wherein the guiding device is designed to guide the contact device into the mounting position.

2. The rapid charging system according to claim 1,
**characterized in that**
the contact device (14, 83, 114) can be centered relative to the guiding device (119) by means of the guiding device.

3. The rapid charging system according to claim 1 or 2,
**characterized in that**
the guiding device (119) forms a V-shaped receiving opening (122) for guiding the contact device (14, 83, 114) into the mounting position (117).

4. The rapid charging system according to any one of the preceding claims,
**characterized in that**
in the mounting position (117), the guiding device (119) forms a linear guide (123) in the vertical direction.

5. The rapid charging system according to any one of the preceding claims,
**characterized in that**
the mounting device (101) has a cleaning device (120) for the contact device (14, 83, 114), said cleaning device being arranged and designed in such a manner that contact elements (17, 84, 128) of the contact device come into contact with the cleaning device prior to and/or after a movement of the contact device into the mounting position (117).

6. The rapid charging system according to claim 5,
**characterized in that**
the cleaning device (120) is a brush (127) and/or a wiper.

7. The rapid charging system according to any one of the preceding claims,
**characterized in that**
the positioning device (15, 113) has a transverse guide (25, 111), by means of which the contact device (14, 83, 114) can be positioned transversely relative to the charging contact unit (12, 89, 100) and to the vehicle (103), wherein the transverse guide is arranged at a distal end of a pantograph or of a swing arm (19, 112) of the positioning device.

8. The rapid charging system according to claim 7,
**characterized in that**
the contact device (14, 83, 114) is arranged on the transverse guide (25, 111) in a freely displaceable manner.

9. The rapid charging system according to any one of the preceding claims,
**characterized in that**
the contact device (14, 83, 114) has a contact element support (16) comprising contact elements (17, 84, 128).

10. The rapid charging system according to claim 9,
**characterized in that**
the contact element support (16) forms two positioning surfaces, which are designed to match guiding surfaces of the guiding device (119) for guiding the contact element support.

11. The rapid charging system according to claim 9 or 10,
**characterized in that**
the contact element support (16) has two rolling bodies (126), which are designed to come into contact with a guide track (125) of the guiding device (119).

12. The rapid charging system according to any one of claims 9 to 11,
**characterized in that**
the positioning device (15, 113) of the contact apparatus (11, 99) has a pivot mechanism, by means of which the contact element support (16) can be inclined relative to a vertical axis (116) of the contact element support.

13. The rapid charging system according to claim 12,
**characterized in that**
the pivot mechanism is realized as a linkage (108) of the positioning device (15, 113).

14. The rapid charging system according to any one of claims 12 or 13,
**characterized in that**
by means of the pivot mechanism, the contact element support (16) can be aligned orthogonally relative to the charging contact unit (12, 89, 100) in the contact position (115) and at an inclination relative to a horizontal roof (102) of the vehicle in the mounting position (117).

15. The rapid charging system according to any one of the preceding claims,
**characterized in that**
the rapid charging system (10, 82, 94, 98) comprises a charging station and a charging contact unit (12, 89, 100).

16. A method for mounting a contact apparatus (11, 99) on a mounting device (101) of a rapid charging system (10, 82, 94, 98) for electrically driven vehicles, in particular electric buses or the like, comprising a contact apparatus and a mounting device, wherein the contact apparatus and the mounting device are arranged on a vehicle (103), wherein the contact apparatus comprises a contact device (14, 83, 114), wherein the contact device is brought into contact with a charging contact unit (12, 89, 100), wherein the contact apparatus comprises a positioning device (15, 113), wherein the contact device is positioned relative to the charging contact unit and to the vehicle in the vertical direction and in the horizontal direction and is brought from a contact position (115) on the charging contact unit into a mounting position (117) on the mounting device on the vehicle by means of the positioning device, wherein the contact device is moved toward the mounting device in the vertical direction by means of the positioning device,
**characterized in that**
the contact device is positioned in the vertical direction relative to the charging contact unit and/or to the vehicle by means of a pantograph or a swing arm (19) of the positioning device, wherein the mounting device forms a receiving opening (122) comprising a guiding device (119), wherein the contact device is guided into the mounting position in the vertical direction and in the horizontal direction and is positioned by means of the guiding device as the contact device moves vertically downward.

## Revendications

1. Système de recharge rapide (10, 82, 94, 98) pour des véhicules à entraînement électrique, notamment des bus électriques ou d'autres véhicules semblables, le système de recharge rapide comprenant un dispositif de contact (11, 99) et un dispositif d'appui (101) pour supporter le dispositif de contact, le dispositif de contact servant à former une connexion électrique conductrice entre un véhicule et une station de recharge fixe comprenant une unité de contact de recharge (12, 89, 100), le dispositif de contact et le dispositif d'appui pouvant être disposés sur un véhicule (103), le dispositif de contact comprenant un moyen de contact (14, 83, 114), le moyen de contact pouvant venir en contact avec l'unité de contact de recharge, le dispositif de contact comprenant un moyen de positionnement (15, 113), le moyen de contact pouvant être positionné par rapport à l'unité de contact de recharge et au véhicule dans la direction verticale et dans la direction horizontale et pouvant être déplacé d'une position de contact (115) sur l'unité de contact de recharge dans une position de support (117) sur le dispositif d'appui sur le véhicule au moyen du moyen de positionnement, le moyen de contact pouvant être déplacé vers le dispositif d'appui dans la direction verticale au moyen du moyen de positionnement,
**caractérisé en ce que**
le moyen de positionnement a un pantographe ou un bras oscillant (19) destiné à positionner le moyen de contact dans la direction verticale par rapport à l'unité de contact de recharge et/ou au véhicule, le dispositif d'appui formant une ouverture de réception (122) comprenant un moyen de guidage (119) au moyen duquel le moyen de contact peut être positionné dans la position de support dans la direction verticale et dans la direction horizontale quand le moyen de contact se déplace verticalement vers le bas, le moyen de guidage étant configuré pour guider le moyen de contact dans la position de support.

2. Système de recharge rapide selon la revendication 1,
**caractérisé en ce que**
le moyen de contact (14, 83, 114) peut être centré par rapport au moyen de guidage (119) au moyen du moyen de guidage.

3. Système de recharge rapide selon la revendication 1 ou 2,
**caractérisé en ce que**
le moyen de guidage (119) forme une ouverture de réception (122) en forme de V qui est destinée à guider le moyen de contact (14, 83, 114) dans la position de support (117).

4. Système de recharge rapide selon l'une quelconque des revendications précédentes,
**caractérisé en ce que**
dans la position de support (117), le moyen de guidage (119) forme un guide linéaire (123) dans la direction verticale.

5. Système de recharge rapide selon l'une quelconque des revendications précédentes,
**caractérisé en ce que**
le dispositif d'appui (101) a un moyen de nettoyage (120) pour le moyen de contact (14, 83, 114), ledit moyen de nettoyage étant disposé et configuré de telle manière que des éléments de contact (17, 84, 128) du moyen de contact viennent en contact avec le moyen de nettoyage avant et/ou après un déplacement du moyen de contact dans la position de support (117).

6. Système de recharge rapide selon la revendication 5,
**caractérisé en ce que**
le moyen de nettoyage (120) est une brosse (127) et/ou un racleur.

7. Système de recharge rapide selon l'une quelconque des revendications précédentes,
**caractérisé en ce que**
le moyen de positionnement (15, 113) a un guide transversal (25, 111) au moyen duquel le moyen de contact (14, 83, 114) peut être positionné dans la direction transversale par rapport à l'unité de contact de recharge (12, 89, 100) et au véhicule (103), le guide transversal étant disposé à une extrémité distale d'un pantographe ou d'un bras oscillant (19, 112) du moyen de positionnement.

8. Système de recharge rapide selon la revendication 7,
**caractérisé en ce que**
le moyen de contact (14, 83, 114) est disposé sur le guide transversal (25, 111) d'une manière librement déplaçable.

9. Système de recharge rapide selon l'une quelconque des revendications précédentes,
**caractérisé en ce que**
le moyen de contact (14, 83, 114) a un support d'éléments de contact (16) comprenant des éléments de contact (17, 84, 128).

10. Système de recharge rapide selon la revendication 9,
**caractérisé en ce que**
le support d'éléments de contact (16) forme deux surfaces de positionnement qui sont configurées de manière correspondante à des surfaces de guidage du moyen de guidage (119) pour guider le support d'éléments de contact.

11. Système de recharge rapide selon la revendication 9 ou 10,
**caractérisé en ce que**
le support d'éléments de contact (16) a deux corps de roulement (126) qui sont configurés pour venir en contact avec une bande de guidage (125) du moyen de guidage (119).

12. Système de recharge rapide selon l'une quelconque des revendications 9 à 11,
**caractérisé en ce que**
le moyen de positionnement (15, 113) du dispositif de contact (11, 99) a un mécanisme de pivotement au moyen duquel le support d'éléments de contact (16) peut être incliné par rapport à un axe vertical (116) du support d'éléments de contact.

13. Système de recharge rapide selon la revendication 12,
**caractérisé en ce que**
le mécanisme de pivotement est réalisé comme articulation (108) du moyen de positionnement (15, 113).

14. Système de recharge rapide selon l'une quelconque des revendications 12 ou 13,
**caractérisé en ce**
**qu'**au moyen du mécanisme de pivotement, le support d'éléments de contact (16) peut être aligné dans la direction orthogonale par rapport à l'unité de contact de recharge (12, 89, 100) dans la position de contact (115) et peut être aligné dans une inclinaison par rapport à un toit horizontal (102) du véhicule dans la position de support (117).

15. Système de recharge rapide selon l'une quelconque des revendications précédentes,
**caractérisé en ce que**
le système de recharge rapide (10, 82, 94, 98) comprend une station de recharge et une unité de contact de recharge (12, 89, 100).

16. Procédé pour supporter un dispositif de contact (11, 99) sur un dispositif d'appui (101) d'un système de recharge rapide (10, 82, 94, 98) pour des véhicules à entraînement électrique, notamment des bus électriques ou d'autres véhicules semblables, comprenant un dispositif de contact et un dispositif d'appui, le dispositif de contact et le dispositif d'appui étant disposés sur un véhicule (103), le dispositif de contact comprenant un moyen de contact (14, 83, 114), le moyen de contact étant mis en contact avec une unité de contact de recharge (12, 89, 100), le dispositif de contact comprenant un moyen de positionnement (15, 113), le moyen de contact étant positionné par rapport à l'unité de contact de recharge et au véhicule dans la direction verticale et dans la direction horizontale et étant déplacé d'une position de contact (115) sur l'unité de contact de recharge dans une position de support (117) sur le dispositif d'appui sur le véhicule au moyen du moyen de positionnement, le moyen de contact étant déplacé vers le dispositif d'appui dans la direction verticale au moyen du moyen de positionnement,
**caractérisé en ce que**
le moyen de contact est positionné dans la direction verticale par rapport à l'unité de contact de recharge et/ou au véhicule au moyen d'un pantographe ou d'un bras oscillant (19) du moyen de positionnement, le dispositif d'appui formant une ouverture de réception (122) comprenant un moyen de guidage (119), le moyen de contact étant guidé dans la position de support dans la direction verticale et dans la direction horizontale et étant positionné au moyen du moyen de guidage quand le moyen de contact se déplace verticalement vers le bas.
